# EUROPÄISCHE PATENTSCHRIFT

(11) **EP 1 611 652 B1**
(45) Veröffentlichungstag und Bekanntmachung des Hinweises auf die Patenterteilung: **16.08.2006**
(21) Anmeldenummer: 04722555.2
(22) Anmeldetag: 23.03.2004
(51) Int. Cl.: H02B 1/21

(54) **VERRIEGELUNGSELEMENT ZUR BEFESTIGUNG EINES INSTALLATIONSGERÄTES FÜR SAMMELSCHIENEN**
LOCKING ELEMENT FOR FIXING AN INSTALLATION DEVICE FOR BUS BARS
ELEMENT DE VERROUILLAGE POUR FIXER UN APPAREIL D'INSTALLATION POUR DES BARRES OMNIBUS

(30) Priorität: 04.04.2003 DE 10315501; 04.04.2003 DE 20305510 U
(43) Veröffentlichungstag der Anmeldung: 04.01.2006
(73) Patentinhaber: Bruchmann, Klaus, D-96450 Coburg (DE)
(72) Erfinder: Bruchmann, Klaus, D-96450 Coburg (DE)
(74) Vertreter: Appelt, Christian W.
(86) Internationale Anmeldenummer: PCT/EP2004/003075
(87) Internationale Veröffentlichungsnummer: WO 2004/088804

(56) Entgegenhaltungen:
- DE-A- 4 038 336
- DE-A- 10 061 939

## Beschreibung

Die vorliegende Erfindung begrifft ein Verriegelungselement zur Befestigung eines Installationsgerätes an Sammelschienen, das auch für Sammelschienen unterschiedlicher Breite geeignet ist.

Installationsgeräte für Sammelschienen sind in unterschiedlichen Ausführungsformen bekannt, wobei solche Installationsgeräte mit Hakenteilen an Sammelschienen einhängbar und befestigbar sind. Um zu ermöglichen, daß solche Installationsgeräte an Sammelschienen unterschiedlicher Breite befestigt werden können, ist es bekannt, ein federbelastetes Verriegelungselement vorzusehen, das in einer Längsrichtung zwischen verschiedenen Befestigungspositionen verschiebbar und mit Halteabsätzen versehen ist, die so ausgelegt sind, daß sie in den entsprechenden Befestigungspositionen die jeweils verwendeten Sammelschienen in unterschiedlichen Breiten hintergreifen und damit das Installationsgerät an der jeweiligen Sammelschiene befestigen. Ein solches Verriegelungselement ist beispielsweise aus der DE 39 40 154 C1 oder aus der DE 40 38 336 A bekannt.

Ausgehend vom Stand der Technik ist es eine Aufgabe der vorliegenden Erfindung, ein Verriegelungselement zur Befestigung eines Installationsgerätes für Sammelschienen sowie ein Abdeckelement für ein Installationsgerät mit einem solchen Verriegelungselement zur Verfügung zu stellen, das geringe Abmessungen, gleichzeitig aber eine hohe Funktionssicherheit aufweist, sowie möglichst einfach und kostengünstig herzustellen ist.

Diese Aufgabe wird durch ein Verriegelungselement gemäß Anspruch 1, ein Abdeckelement für ein Installationsgerät nach Anspruch 17 und ein Installationsgerät gemäß Anspruch 23 gelöst, die Ansprüche 2 bis 16 betreffen besonders vorteilhafte Ausführungsformen des erfindungsgemäßen Verriegelungselements, die Ansprüche 18 bis 22 betreffen besonders vorteilhafte Ausführungsformen des erfindungsgemäßen Abdeckelements.

Erfindungsgemäß ist das Verriegelungselement zur Befestigung eines Installationsgerätes für Sammelschienen, das für Sammelschienen unterschiedlicher Breite geeignet ist, so ausgebildet, daß es in oder an einem Installationsgerät im wesentlichen linear zwischen verschiedenen Befestigungspositionen beweglich befestigbar ist, wobei diese Bewegung im folgenden als eine Bewegung in der z-Richtung bezeichnet wird. Das erfindungsgemäße Verriegelungselement ist ein einstückiges, integrales Bauteil, das ein Führungselement für die Führung in der linearen Bewegung des Verriegelungselements in z-Richtung, ein mit Halteabsätzen versehenes Befestigungselement und ein zumindest in Richtung der linearen Bewegung belastbares oder komprimierbares Federelement umfaßt. Unter "in Richtung der linearen Bewegung belastbar" ist zu verstehen, daß das Federelement zumindest in der angegebenen Richtung seine Federwirkung entfalten kann. Durch die einstückige, integrale Ausbildung des Verriegelungselements wird eine sehr kompakte und einfache Bauweise, insbesondere durch das integral an dem Verriegelungselement ausgebildete Federelement ermöglicht. Durch diese Bauweise wird ein zusätzliches Federelement, bei dem es sich in der Regel um eine Schraubenfeder gehandelt hat, vermieden, so daß zum einen die Anzahl der notwendigen Bauteile verringert wird, so daß sowohl die Herstellung als auch das Zusammensetzen des Systems vereinfacht wird, zum anderen die baulichen Dimensionen einfach an die jeweiligen anwendungsabhängigen Anforderungen angepaßt und insbesondere verringert werden können, weil zum Beispiel auf einen Führungsansatz für eine externe Schraubenfeder sowie auf einen Schlitz zur Aufnahme der Schraubenfeder in einem Verriegelungselement verzichtet werden kann, die aufgrund des erforderlichen Zusammenwirkens und der zu erzielenden Stabilität jedes einzelnen Elementes gewisse minimale Dimensionen aufweisen müßten.

Bevorzugt ist das Verriegelungselement im wesentlichen plattenförmig ausgebildet, wobei bei ausreichender Stabilität Dicken des Verriegelungselements verwirklicht werden können, die, je nach Anwendungsfall, unter 3 mm liegen, bei bevorzugten und üblichen Ausführungsformen unter 2 mm, insbesondere zwischen 1 mm und 1,5 mm. Dadurch sind Verriegelungselemente verfügbar, die in einer y-Richtung senkrecht zur linearen Verschieberichtung (z-Richtung) zwischen einzelnen Befestigungspositionen extrem klein bemessen sein können.

Bevorzugt ist das Verriegelungselement aus einem Kunststoffmaterial hergestellt, insbesondere aus POM (Polyoxymethylen). Bei einer bevorzugten Ausführungsform wird das Kunststoffelement als Spritzgußelement hergestellt, so daß die Herstellungskosten äußerst gering gehalten werden können.

Das Verriegelungselement kann je nach Anwendungsform unterschiedlich ausgebildet sein. Aufgrund der einstückigen und integralen Bauweise, insbesondere in den Fällen, in denen es als Spritzgußelement ausgeführt ist, können nahezu beliebige Formen auf einfache Weise realisiert werden, so daß eine äußerst flexible Anpassung an unterschiedliche Installationsgeräte und Anwendungen möglich ist.

Bei einer bevorzugten Ausführungsform ist das Führungselement im wesentlichen balkenförmig oder brettähnlich ausgebildet, wobei sich eine Längsrichtung des balken- oder brettförmigen Führungselementes im wesentlichen in einer Längsrichtung oder z-Richtung erstreckt, in der das Verriegelungselement relativ zu dem Installationsgerät verschiebbar ist.

Das Führungselement kann im wesentlichen massiv ausgebildet sein, es kann jedoch auch Ausnehmungen oder Hohlräume aufweisen, insbesondere, um Gewicht oder Material zu sparen oder andere Funktionselemente vorzusehen. Bevorzugt weist jedoch das Führungselement zumindest zwei im wesentlichen parallele Führungskanten in z-Richtung bzw. in Verschieberichtung des Verriegelungselements auf

Bevorzugt erstreckt sich direkt von dem Führungselement das mit Halteabsätzen versehene Befestigungselement, wobei sich dieses Element bevorzugt im wesentlichen in einem 90° Winkel von der z-Richtung bzw. der Längserstreckung des Führungselements, oder auch in x-Richtung, erstreckt, wobei Führungselement und Befestigungselement ineinander übergehen bzw. auch das Führungselement gegebenenfalls bereits mit Halteabsätzen versehen ist. Bevorzugt bilden Führungselement und Befestigungselement ein im wesentlichen L-förmiges Element.

Bei einer bevorzugten Ausführungsform ist das Federelement mäanderförmig ausgebildet und an dem mit Halteabsätzen versehenen Befestigungselement angebracht, so daß es sich im wesentlichen parallel zu dem Führungselement erstreckt. Es ist jedoch auch möglich, daß das Federelement an dem Führungselement selbst oder auch sowohl an dem Führungselement als auch an dem Befestigungselement angebracht ist.

Bei einer weiteren bevorzugten Ausführungsform besteht das ganze Verriegelungselement im wesentlichen aus einem homogenen und gleichartigen Material. Es ist jedoch auch möglich, beispielsweise das Federelement aus einem anderem Material als das Befestigungselement oder das Führungselement herzustellen. Eine einheitliche Materialwahl ermöglicht ein besonders einfaches und kostengünstiges Herstellungsverfahren des Verriegelungselements, während durch Auswahl unterschiedlicher Materialien die einzelnen Elemente noch genauer an ihre Aufgaben angepaßt werden können. Beispielsweise kann eine Federkonstante für das Federelement unabhängig von der Materialwahl der anderen Elemente eingestellt werden, was insbesondere Freiheiten unter Berücksichtigung sowohl der Federkonstante bzw. der Steifigkeit der Materialien als auch der Dimensionen ermöglicht. Bei Standardanwendungen wird jedoch in der Regel ein Verriegelungselement aus einem einheitlichen Material hergestellt, da die Vorteile der einfachen Herstellung insbesondere mit einem integralen Federelement und die damit verbundene kostengünstige Herstellung der Elemente überwiegen.

Bei einer Ausführungsform ist das Führungselement mit einer länglichen Ausnehmung zur Aufnahme eines Führungsbolzens versehen, so daß Endpositionen in der linearen Bewegung in z-Richtung des Verriegelungselements festgelegt sind, nämlich eine "obere" Befestigungsposition und eine "untere" Befestigungsposition, wobei üblicherweise die obere Befestigungsposition für breite Sammelschienen und die untere Befestigungsposition für schmale Sammelschienen vorgesehen ist.

Auch verhindert diese längliche Ausnehmung, in die bei erfindungsgemäßem Einsatz ein Führungsbolzen eines Installationsgeräts oder ein ähnliches Element eingreift, daß das Verriegelungselement aus dem Installationsgerät herausfällt bzw. von diesem getrennt wird.

Bei einer besonderen Ausführungsform umfaßt das Führungselement eine Nut für den Eingriff eines Werkzeuges zur manuellen Bewegung des Verriegelungselements in linearer z-Richtung entgegen der Federkraft des Federelementes. Dadurch kann der Benutzer das Verriegelungselement gegen die Federkraft des Federelementes in z-Richtung bewegen, um das Installationsgerät von der Sammelschiene zu lösen.

Es ist selbstverständlich auch möglich, daß anstatt der Nut für den Eingriff eines Werkzeuges ein anderes Element vorgesehen ist, das beispielsweise auch mit der Hand ergriffen werden kann, um das Element im wesentlichen in z-Richtung zu bewegen und ein Lösen von der Sammelschiene zu bewerkstelligen.

Bei einer besonders bevorzugten Ausführungsform umfaßt das Führungselement eine Rastzunge zum Verrasten des Verriegelungselements in dem Installationsgerät, wobei bevorzugt in dem Installationsgerät ein Rastabsatz vorgesehen ist, der mit der Restzunge zusammenwirkt.

Dadurch ist es möglich, daß das Verriegelungselement einfach in eine Position, beispielsweise in einen dafür vorgesehenen Schlitz bzw. Hohlraum eines Installationsgerätes, eingeschoben wird, bis die Rastzunge einen dazugehörigen Rastabsatz hintergreift, so daß das Element nicht aus dem Installationsgerät herausfallen kann. Eine Position, in der die Rastzunge mit dem Rastabsatz zusammenwirkt, definiert dabei auch die untere Position des Verriegelungselements, während das Verriegelungselement ausgehend von dieser Position weiter gegen die Kraft des Federelementes in z-Richtung verschoben werden kann, um die unterschiedlichen Befestigungspositionen einzunehmen.

Bei einer bevorzugten Ausführungsform sind die Halteabsätze des Befestigungselements im wesentlichen stufenförmig ausgebildet, während die Stufen einen Innenwinkel von im wesentlichen 90° aufweisen.

Bei einer weiteren bevorzugten Ausführungsform sind die Innenwinkel α einer Stufe jedoch um einen Winkel β kleiner als 90°, wobei insbesondere Winkel α zwischen 70° und 85°, bei einer bevorzugten Ausführungsform ein Winkel α von ca. 80° vorgesehen sind.

Bevorzugt können insbesondere in Verbindung mit einem Verriegelungselement, das stufenförmig ausgebildet ist und bei dem die Stufen einen Innenwinkel aufweisen, der kleiner ist als 90°, das Verriegelungselement und das Installationsgerät so ausgebildet sein, daß sich das Installatiönsgerät nicht nur in z-Richtung, also der Längsverschieberichtung, bewegen kann, sondern zusätzlich in einer Ebene, die durch das Verriegelungselement gebildet wird, verdreht bzw. verkippt werden kann, wobei lediglich kleine Dreh- bzw. Kippwinkel möglich sind, so daß eine besonders zuverlässige Verklemmung bzw. Befestigung an den Sammelschienen erzielt werden kann. Die Möglichkeit des Verdrehens bzw. des Kippens des Verriegelungselements kann auf einfache Weise dadurch realisiert werden, daß das Verriegelungselement und das Installationsgerät so ausgebildet sind, daß das Verriegelungselement in seiner bestimmungsgemäßen Position ein gewisses Spiel aufweist.

Die Erfindung betrifft ferner ein Abdeckelement für ein Installationsgerät für Sammelschienen unterschiedlicher Breite sowie ein Installationsgerät mit mindestens einem Verriegelungselement, das in Längsrichtung, der z-Richtung, zwischen verschiedenen Befestigungspositionen bewegbar ist, wie es oben beschrieben worden ist. Zur Vermeidung von Wiederholungen wird im Hinblick auf die besonderen Ausgestaltungen und die damit erzielbaren Vorteile, die in analoger Form auch auf das Installationsgerät anwendbar sind, auf die obige Beschreibung verwiesen. Aufgrund der vielfältigen Möglichkeiten zur Gestaltung des einstückigen integralen Verriegelungselements, insbesondere aufgrund der erzielbaren geringeren Dikke des Verriegelungselements, die, wie erläutert, insbesondere auch durch das einteilig mit dem Verriegelungselement ausgebildete Federelement unterstützt wird, kann das Verriegelungselement auf besonders vorteilhafte Weise und unter geringer Raumbeanspruchung in das Installationsgerät eingesetzt werden.

Ein bevorzugtes Installationsgerät umfaßt ein Abdeckelement, wobei bei einer besonders bevorzugten Ausführungsform die Verriegelungsvorrichtung in einem Seitenbereich des Abdekkelements angeordnet ist. Aufgrund der sehr geringen Baudicke (y-Richtung) des erfindungsgemäßen Verriegelungselements kann auch die Materialdicke des Abdeckelements sehr gering gewählt werden, wobei bevorzugt das Verriegelungselement in einem Schlitz oder Hohlraum in einem Seitenbereich bzw. in einer Seitenwand des Abdeckelements vorgesehen ist.

Bei einer bevorzugten Ausführungsform umfaßt das Abdeckelement auch die Hakenteile zur Aufnahme der verwendeten Sammelschienen. Es ist jedoch auch möglich, daß die Hakenteile an einem anderen Element des Installationsgerätes, beispielsweise einem Unterteil des Installationsgerätes, befestigt sind.

Bei einer besonderen Ausführungsform umfaßt das Installationsgerät, insbesondere das Abdeckelement, einen Führungsbolzen, der so ausgebildet ist, daß er in eine längliche Ausnehmung des Verriegelungselements eingreift, so daß zum einem sichergestellt wird, daß das Verriegelungselement nicht aus dem Installationsgerät herausfallen kann, zum anderen maximale Endpositionen des verschiebbaren Verriegelungselements in z-Richtung festgelegt sind. Der Führungsbolzen kann dabei integraler Bestandteil des Installationsgeräts oder des Abdekkelements sein. Beispielsweise kann es sich um einen integral ausgebildeten Kunststoffbolzen handeln. Es ist jedoch auch möglich, daß es sich bei dem Führungsbolzen um ein externes Bauteil handelt, das nach Einsatz des Verriegelungselements eingesetzt wird, so daß er sich durch die längliche Ausnehmung des Verriegelungselements erstreckt. In diesem Falle sind in dem Installationsgerät bzw. dem Abdeckelements des Installationsgeräts entsprechende Aufnahmen für den Führungsbolzen vorgesehen.

Bei einer weiteren Ausführungsform umfaßt das Installationsgerät einen Rastabsatz für eine Rastzunge des Verriegelungselements, so daß eine Endposition des Verriegelungselements festgelegt werden kann, in der das Verriegelungselement nicht aus dem Installationsgerät herausfällt. Es ist möglich, sowohl den oben beschriebenen Führungsbolzen als auch einen Rastabsatz vorzusehen, jedoch reicht auch eines dieser Elemente sowohl zur Sicherung des Verriegelungselements in dem Installationsgerät als auch zur Positionierung des Verriegelungselements in den verschiedenen Befestigungspositionen aus.

Bei einer besonders bevorzugten Ausführungsform sind das Verriegelungselement und das Installationsgerät so ausgebildet, daß das Verriegelungselement in einer Richtung quer zur Verschieberichtung oder z-Richtung um einen festgelegten Betrag bzw. um einen festgelegten Winkel γ kippbar bzw. verdrehbar ist. Dadurch kann sichergestellt werden, daß ein Hakenteil, eine Sammelschiene und ein Verriegelungselement so zusammenwirken, daß durch das Kippen bzw. Verdrehen des Verriegelungselements eine besondere Verklemmung der Sammelschiene und damit eine zuverlässigere Befestigung sichergestellt werden.

Bevorzugt wird in diesem Falle ferner ein Verriegelungselement eingesetzt, bei dem die Innenwinkel α der Stufen um einen Winkel β kleiner ausgebildet sind als 90°, wobei ein maximaler Kippwinkel γ im wesentlichen dem Winkel β entspricht, weil auf diese Weise eine besonders sichere und zuverlässige Verklemmung der Sammelschienen und damit eine zuverlässige Befestigung des Installationsgerätes erreicht werden.

Diese und weitere Merkmale und Vorteile der vorliegenden Erfindung werden anhand der beigefügten schematischen Zeichnungen noch deutlicher. Es zeigen:
- Fig. 1: eine perspektivische Darstellung einer ersten Ausführungsform eines erfindungsgemäßen Verriegelungselements;
- Fig. 2: eine perspektivische Darstellung eines Abdeckelements eines erfindungsgemäßen Installationsgerätes mit einer Ausführungsform eines erfindungsgemäßen Verriegelungselements;
- Fig. 3: eine perspektivische Darstellung einer zweiten Ausführungsform eines erfindungsgemäßen Verriegelungselements, und
- Fig. 4: eine perspektivische Darstellung einer Aufnahme für ein Verriegelungselement, wie es in Figur 3 dargestellt ist.

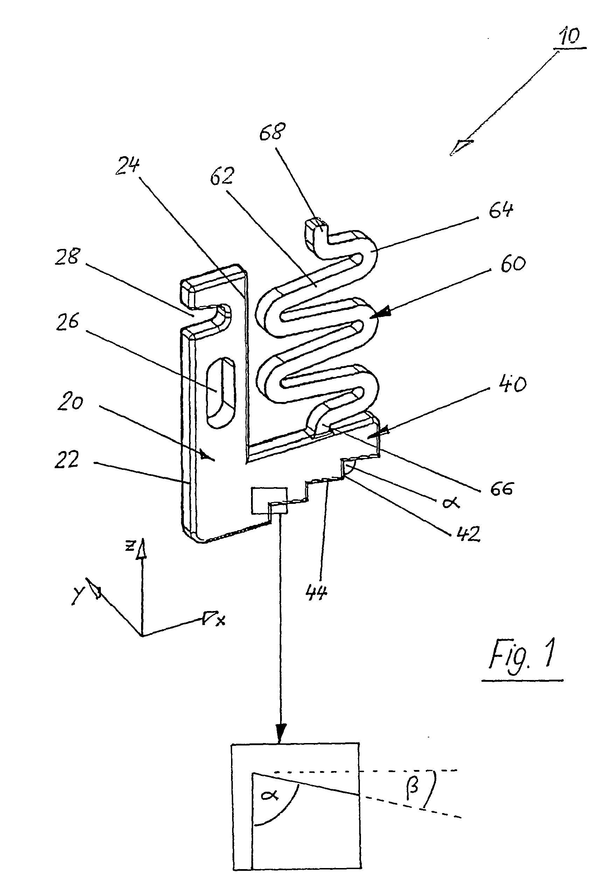

Fig. 1 zeigt schematisch eine perspektivische Darstellung einer Ausführungsform eines erfindungsgemäßen Verriegelungselements 10, das als Spritzgußteil aus Kunststoff, hier POM (Polyoxymethylen), hergestellt ist. Das Verriegelungselement 10 umfaßt ein im wesentlichen rechteckiges bzw. balkenförmiges Führungselement 20 mit zwei Führungskanten 22 und 24, an das sich ein Befestigungselement 40 mit Halteabsätzen anschließt, die durch vertikale Stufenkanten 42 und im wesentlichen horizontale Stufenkanten 44 gebildet werden. Das Befestigungselement 40 erstreckt sich im wesentlichen in einem rechten Winkel von dem Führungselement 20.

An dem Befestigungselement 40 ist ein Federelement 60 befestigt, das im wesentlichen mäanderförmig ausgebildet ist und aus geradlinigen Verbindungselementen 62 und Krümmungselementen 64 aufgebaut ist.

Das Federelement 60 ist an einem Anschlußelement 66 im wesentlichen in einer x-Richtung in der Mitte der Erstreckung des Befestigungselements 40 angebracht.

An der gegenüberliegenden Seite weist das Federelement 60 ein Kontaktelement 68 auf, das bei erfindungsgemäßem Einsatz in einem Installationsgerät an einem Gegenelement anstößt, so daß das Federelement 60 vorgespannt werden kann. Dadurch ist die Vorspannung des Federelements 60 in z-Richtung und damit in der beabsichtigten Führungsrichtung des Verriegelungselements 10 parallel zu den Führungskanten 24 und 26 möglich.

Das Befestigungselement 40 umfaßt mehrere vertikale Stufenkanten 42 und im wesentlichen horizontale Stufenkanten 44, die zusammen stufenförmige Halteabsätze bilden. Es ist möglich, daß die vertikalen Stufenkanten tatsächlich vertikal, also in z-Richtung, verlaufen, während die horizontalen Kanten tatsächlich exakt in horizontaler Richtung, also in x-Richtung, verlaufen, so daß sie einen Innenwinkel von ca. 90° bilden. Bei der gezeigten Ausführungsform sind jedoch die horizontalen Stufenkanten 40 gegenüber der x-Richtung leicht geneigt, so daß eine vertikale Stufenkante 42 und eine horizontale Stufenkante 44 einen Winkel α bilden, der um einen Winkel β kleiner ist als 90°. Bei der gezeigten Ausführungsform weist der Winkel α eine Größe von ca. 85° auf.

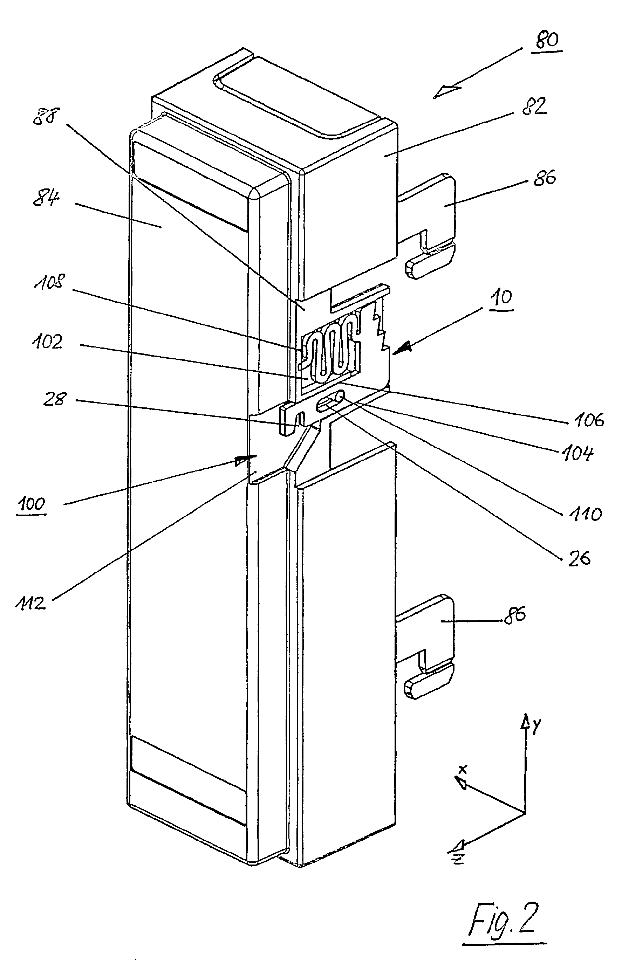

Das Führungselement 20 weist in einem Mittenbereich eine längliche Ausnehmung 26, auch Führungsausnehmung genannt, auf, die der Aufnahme eines zugehörigen Führungsbolzens 110 eines Installationsgerätes dient (siehe Fig. 2).

Ferner weist das Führungselement 22 eine Nut 28 auf, in die mit einem Werkzeug, beispielsweise einem Schraubenzieher, eingegriffen werden kann, um das Verriegelungselement 10 in z-Richtung gegen die Kraft des Federelements 60, in Fig. 1 nach oben, zu bewegen, so daß das Verriegelungselement bzw. das Installationselement von den Sammelschienen gelöst werden kann.

Fig. 2 zeigt eine Ausführungsform eines erfindungsgemäßen Abdeckelements für ein Installationsgerät für Sammelschienen.

Die in Fig. 2 gezeigte Ausführungsform des Abdeckelements 80 ist im wesentlichen quaderförmig mit vier Seitenwänden 82 und einem Deckel 84 sowie einer offenen Seite, die dem Deckel 84 gegenüberliegt, ausgebildet. Das Abdeckelement weist eine Aufnahme 100 für ein Verriegelungselement 10 auf, wie es im Zusammenhang mit Fig. 1 beschrieben ist, so daß auf die Beschreibung zu Fig. 1 verwiesen wird.

Die Aufnahme 100 für das Verriegelungselement 10 umfaßt eine Ausnehmung 102 für das Federelement 60 sowie zwei Anlagekanten 104 und 106 für die Führungskanten (22, 24; siehe Fig. 1) des Führungselements (20; siehe Fig. 1) des Verriegelungselements 10.

Wie in Fig. 2 deutlich sichtbar ist, umfaßt das Abdeckelement 80 einen Führungsbolzen 110, der in die längliche Ausnehmung 26, die in dem Führungselement 20 des Verriegelungselements 10 angeordnet ist, eingreift. Das Verriegelungselement 10 befindet sich bei der in Fig. 2 gezeigten Darstellung in einer oberen Position, in der der Führungsbolzen 110 am unteren Rand der Ausnehmung 26 anliegt, so daß das Federelement 60 in einer komprimierten Position ist, die das Federelement 60 nach unten (in Fig. 2 nach rechts, in z-Richtung) drückt. Es soll an dieser Stelle darauf hingewiesen werden, daß das Abdeckelement 80 und Verriegelungselement 10 so ausgebildet sind, daß das Verriegelungselement 10 nicht nur in z-Richtung verschoben werden kann. Vielmehr ist soviel Spiel gegeben, daß das Verriegelungselement 10, im wesentlichen senkrecht zur z-Richtung, gekippt werden kann, so daß bei Einsatz einer Sammelschiene durch das Kippen eine besonders zuverlässige Verklemmung und damit eine sichere Befestigung der Sammelschiene zwischen dem Abdeckelement 80 und insbesondere dem Verriegelungselement 10 und dem Hakenteil 86 möglich ist.

Das Abdeckelement 80 umfaßt ferner einen Ausschnitt 112, so daß über diesen Ausschnitt 112 in die Nut 28 des Verriegelungselements 10 eingegriffen und das Verriegelungselement 10 in z-Richtung nach oben (in Fig. 2 nach links) verschoben werden kann, um die Abdeckvorrichtung 80 von Sammelschienen (nicht gezeigt) zu lösen.

Es wird darauf hingewiesen, daß in Fig. 2 ein Bereich 88 zur Verdeutlichung der Darstellung und insbesondere der Position des Verriegelungselements 10 zeichnerisch weggeschnitten ist. In der tatsächlichen Ausführungsform erstreckt sich jedoch die Seitenwand 82 auch über den Bereich 88 hinaus und ist einstückig mit dem Abdeckelement 80 verbunden.

Der Führungsbolzen 110 ist jedoch nur an der Innenseite mit dem Abdeckelement 80 verbunden, wobei das Abdeckelement so elastisch nachgiebig ausgebildet ist, daß das Verriegelungselement 10 von unten in die Aufnahme 100 eingeschoben werden kann. Dabei kann der Führungsbolzen 110 durch die Elastizität nach innen gedrückt werden und erstreckt sich dann in die Ausnehmung 26.

Es ist darauf hinzuweisen, daß anstelle des fest mit dem Abdeckelement 80 verbundenen Bolzens 110 auch ein Führungsbolzen als getrenntes Bauteil vorgesehen werden kann, das nach Einsetzen des Verriegelungselements 10 in die Aufnahme 100 durch die längliche Ausnehmung 26 hindurch eingesetzt wird, so daß das Verriegelungselement 10 an dem Abdeckelement 80 in den gewünschten Positionen gehalten wird.

Ferner ist es grundsätzlich auch möglich, einen Bereich, der beispielsweise in seiner Größenordnung dem oben erläuterten, nur zur Verdeutlichung in Fig. 2 nicht dargestellten Bereich 88 entspricht, als getrenntes Deckelelement vorzusehen, das nach Einsatz des Führungselements auf das Abdeckelement aufgesetzt werden kann, wobei ein solches Deckelelement beispielsweise mittels Schnappverschlüssen an dem Abdeckelement befestigt werden kann.

Die in Fig. 1 und Fig. 2 gezeigten Verriegelungselemente weisen insgesamt vier Stufen auf, so daß Sammelschienen mit vier unterschiedlichen Breiten eingesetzt werden können. Es ist jedoch auch möglich, daß eine unterschiedliche Stufenanzahl vorgesehen wird, üblich sind insbesondere auch drei oder fünf Stufen.

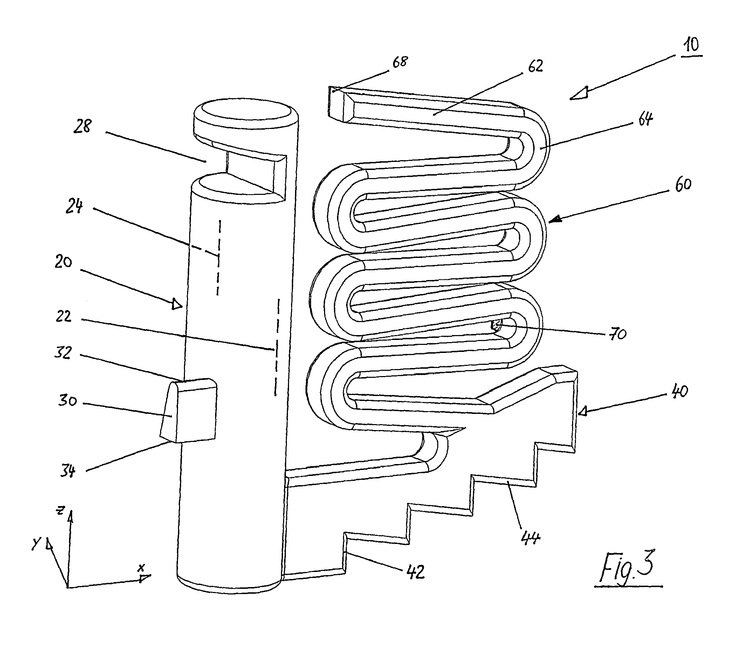

Figur 3 zeigt eine perspektivische Ansicht einer zweiten Ausführungsform eines erfindungsgemäßen Verriegelungselements 10. Gleiche und ähnliche Elemente wurden mit identischen Bezugszeichen versehen, wobei auf die Beschreibung zu Figur 1 verwiesen wird.

Die in Figur 3 gezeigte Ausführungsform des Verriegelungelements 10 umfaßt ein Führungselement 20, das im Gegensatz zu der in Figur 1 dargestellten Ausführungsform im wesentlichen zylinderförmig ausgebildet ist. Dabei sind ebenfalls zwei Führungskanten 22 und 24 vorhanden, die durch eine gestrichelte Linie angedeutet sind. Diese Führungskanten erstrekken sich im wesentlichen rippenförmig parallel zu einer Längsachse des zylinderförmigen Führungselements 22 auf der Außenmantelfläche. Es kann bei dieser Ausführungsform eine Vielzahl von Führungskanten vorgesehen sein, die alle auf der Mantelfläche des im wesentlichen zylinderförmigen Führungselements 20 und zu einer Längsachse des Führungselements 20 im wesentlichen parallel verlaufen.

An dem zylinderförmigen Führungselement 20 ist ein Befestigungselement 40 mit Halteabsätzen angebracht, die wiederum durch vertikale Stufenkanten 42 und im wesentlichen horizontale Stufenkanten 44 gebildet werden. Für die Detailerläuterung wird auch in diesem Zusammenhang insbesondere auf die Beschreibung zu Figur 1 verwiesen.

An dem Befestigungselement 40 ist ein Federelement 60 befestigt, das ebenfalls im wesentlichen mäanderförmig ausgebildet ist und aus geradlinigen Verbindungselementen 62 und Krümmungselementen 64 aufgebaut ist. Das Federelement 60 in Figur 3 ist in einem vorgespannten Zustand dargestellt, der auftritt, wenn auf das Kontaktelement 68 Druck ausgeübt wird, wie es beim erfindungsgemäßen Einsatz in einem Installationsgerät möglich ist.

Zusätzlich umfaßt das Federelement 60 einen im wesentlichen knopfförmig ausgebildeten Vorsprung 70, der seitlich an dem Federelement 60, bei der in Figur 3 gezeigten Ausführungsform auf der rückwärtigen Seite des Federelements 60, angebracht ist. Dieser Vorsprung 70 dient dazu, in einer Richtung im wesentlichen senkrecht zur linearen Bewegung des Verriegelungselements (z-Richtung), also in y-Richtung, eine Kraft auf das Federelement 60 auszuüben, das auch in y-Richtung belastbar ist, d. h. in y-Richtung eine Federkraft und eine Federwirkung ausüben kann.

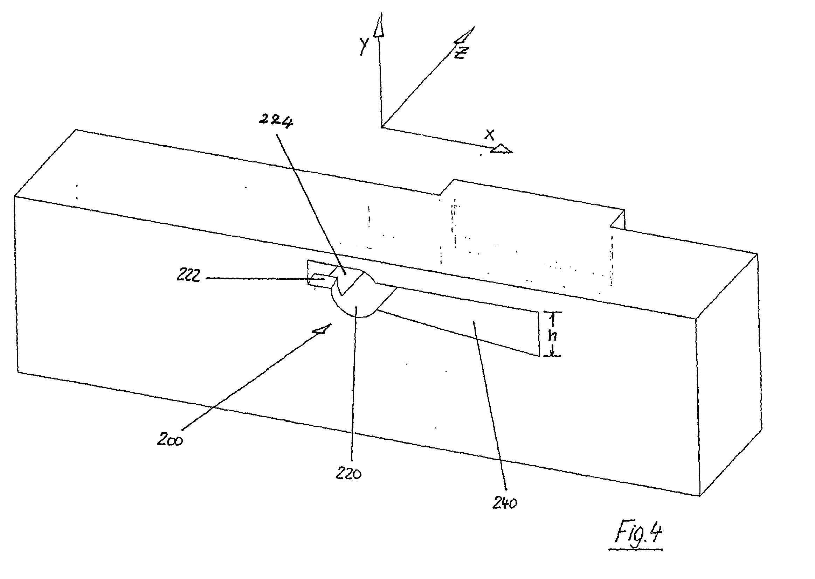

Dieser Vorsprung 70, der sich im wesentlichen in y-Richtung erstreckt, dient in Verbindung mit einem Rastelement 30, das an dem Führungselement 20 angeordnet ist, der Einführung und Positionierung des Verriegelungselements 10 in einer Aufnahme 200 in Figur 4, wie im Zusammenhang mit Figur 4 erläutert werden wird.

Das Rastelement 30 ist im wesentlichen keilförmig ausgebildet. Es umfaßt eine obere abgerundete Kante 32, um das Einfuhren des Verriegelungselements 10 in die in Figur 4 gezeigte Aufnahme 200 zu erleichtern, und eine untere Kante 34, die im Endstellung eingesetzten Zustand des Verriegelungselements 10 in dessen unterer Position an einem Rastvorsprung bzw. Rastabsatz 222 in Figur 4 anliegt, so daß ein Herausfallen des Verriegelungselements 10 aus der zugehörigen Aufnahme 200 vermieden wird.

Figur 4 zeigt schematisch eine Aufnahme 200 für den Einsatz eines Verriegelungselements 10, wie es in Figur 3 dargestellt ist, wobei die Aufnahme 200 eine Ausnehmung 220, die im wesentlichen der Aufnahme des Führungselements 20 dient, und eine Ausnehmung 240 aufweist, die im wesentlichen der Aufnahme des Befestigungselements 40 und des Federelements 60 dient. Die Ausnehmung 220 ist im wesentlichen zylinderförmig ausgebildet und weist einen Fortsatz 224 auf, in den das Rastelement (30, siehe Figur 3) beweglich ist.

Die Aufnahme 240 ist im wesentlichen quaderförmig ausgebildet, weist jedoch einen trapezförmigen Querschnitt auf, so daß eine Höhe h der Aufnahme in einem von der Aufnahme 220 entfernten Bereich größer ist als in einem der Aufnahme 220 nahegelegenen Bereich.

Die Aufnahmen 220 und 240 sind daher, zusammen mit dem Fortsatz 224 der Aufnahme 220, so ausgebildet, daß das in Figur 3 gezeigte Verriegelungselement in die Aufnahmen eingeschoben werden kann, wobei es beim Einschieben in einer Richtung im wesentlichen senkrecht zur linearen Bewegung des Verriegelungselements während des ordnungsgemäßen Einsetzens, also in einer y-Richtung, aufgrund des Federelements 60 und des Vorsprungs 70 vorgespannt wird, wenn das Rastelement 30 auf Höhe eines Rastabsatzes 222 liegt. Wird nun das Verriegelungselement 10 weiter in die Aufnahmen 220, 240 gedrückt, passiert das Rastelement 30 den Rastvorsprung 222 und wird aufgrund der Federwirkung des Federelements 60 und der Anlage des Vorsprungs 70 auf der Innenseite des Aufnahme 240 hinter den Rastabsatz 222 gedrückt, so daß das Verriegelungselement 10 nicht mehr aus der Aufnahme 200 herausfallen kann. Das Verriegelungselement 10 kann sich jedoch weiter innerhalb der Aufnahme 200 bewegen, wobei die maximalen Endpositionen durch den Rastabsatz 222 einerseits und die Begrenzungen der Aufnahmen 220, 240 andererseits bestimmt werden.

Die in der vorstehenden Beschreibung, in der Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste

- 10: Verriegelungselement
- 20: Führungselement
- 22,24: Führungskanten
- 26: Ausnehmung
- 28: Nut
- 30: Rastelement
- 32: obere Kante (Rastelement)
- 34: untere Kante (Rastelement)
- 40: Befestigungselement
- 42: vertikale Stufenkante
- 44: horizontale Stufenkante
- 60: Federelement
- 62: geradliniges Verbindungselement (Federelement)
- 64: Krümmungselement (Federelement)
- 66: Anschlußelement
- 68: Kontaktelement
- 70: Vorsprung
- 80: Abdeckelement (Installationsgerät)
- 82: Seitenwand
- 84: Deckel
- 86: Hakenteil
- 100: Aufnahme (für Verriegelungselement)
- 102: Ausnehmung
- 104, 106: Anlagekante (für Führungskanten 22, 24)
- 110: Führungsbolzen
- 112: Ausschnitt
- 200: Aufnahme (für Verriegelungselement)
- 220: Ausnehmung
- 222: Rastabsatz
- 224: Fortsatz (Ausnehmung)
- 240: Ausnehmung

## Patentansprüche

1. Verriegelungselement zur Befestigung eines Installationsgeräts an Sammelschienen, das so als Schieber ausgebildet ist, daß es in oder an dem Installationsgerät im wesentlichen linear zwischen verschiedenen Befestigungspositionen beweglich befestigbar ist, wobei das Verriegelungselement ein einstückiges Bauteil ist, das mindestens ein Führungselement (20) für die Führung der linearen Bewegung des Verriegelungselements (10) in dem Installationsgerät, mindestens ein mit Halteabsätzen versehenes Befestigungselement (40) und **dadurch gekennzeichnet ist, daß** das Verriegelungselement mindestens ein zumindest in Richtung der linearen Bewegung belastbares Federelement (60) umfaßt, das so ausgelegt ist, daß das Federelement (60) bei bestimmungsgemäßem Einsatz des Verriegelungselements in Führungsrichtung der linearen Bewegung des Verriegelungselements in dem Installationsgerät vorgespannt ist.

2. Verriegelungselement nach Anspruch 1, **dadurch gekennzeichnet, daß** das Verriegelungselement (10) plattenförmig ausgebildet ist.

3. Verriegelungselement nach Anspruch 1 oder 2, **dadurch gekennzeichnet, daß** die Dicke des Verriegelungselements (10) kleiner als 3 mm ist.

4. Verriegelungselement nach einem der vorhergehenden Ansprüche, **dadurch gekennzeichnet, daß** das Verriegelungselement (10) aus einem Kunststoffmaterial besteht.

5. Verriegelungselement nach Anspruch 4, **dadurch gekennzeichnet, daß** das Verriegelungselement (10) ein Spritzgußelement ist.

6. Verriegelungselement nach einem der vorhergehenden Ansprüche, **dadurch gekennzeichnet, daß** das Führungselement (20) balkenförmig ausgebildet ist.

7. Verriegelungselement nach einem der vorhergehenden Ansprüche, **dadurch gekennzeichnet, daß** das mindestens eine Federelement (60) mäanderförmig ausgebildet ist.

8. Verriegelungselement nach einem der vorhergehenden Ansprüche, **dadurch gekennzeichnet, daß** das mindestens eine Führungselement (20) eine längliche Ausnehmung zur Aufnahme eines Führungsbolzens (110) umfaßt.

9. Verriegelungselement nach einem der vorhergehenden Ansprüche, **dadurch gekennzeichnet, daß** das mindestens eine Führungselement (20) eine Nut (28) für den Eingriff eines Werkzeuges zum Bewegen des Verriegelungselements (10) in einer Richtung (z-Richtung) entgegen der Federkraft des Federelements umfaßt.

10. Verriegelungselement nach einem der vorhergehenden Ansprüche, **dadurch gekennzeichnet, daß** das mindestens eine Führungselement eine Rastzunge zum Verrasten des Verriegelungselements (10) in dem Installationsgerät umfaßt.

11. Verriegelungselement nach einem der vorhergehenden Ansprüche, **dadurch gekennzeichnet, daß** die Halteabsätze des Befestigungselements (40) stufenförmig ausgebildet sind.

12. Verriegelungselement nach Anspruch 11, **dadurch gekennzeichnet, daß** ein Innenwinkel α einer Stufe eines Halteabsatzes um einen Winkel β kleiner als 90° ist.

13. Verriegelungselement nach einem der vorhergehenden Ansprüche, **dadurch gekennzeichnet, daß** das Federelement (60) auch in einer Richtung im wesentlichen senkrecht (y-Richtung) zu der linearen Bewegung (x-Richtung) zwischen den verschiedenen Befestigungspositionen belastbar ist.

14. Verriegelungselement nach Anspruch 13, **dadurch gekennzeichnet, daß** das Federelement in einer Richtung senkrecht (y-Richtung) zur Richtung der linearen Bewegung (x-Richtung) verdrehbar ist.

15. Verriegelungselement nach Anspruch 13 oder 14, **dadurch gekennzeichnet, daß** das Federelement (60) seitlich mit einem Vorsprung (70) versehen ist.

16. Verriegelungselement nach Anspruch 15, **dadurch gekennzeichnet, daß** der Vorsprung (70) im wesentlichen knopfförmig ausgebildet ist und eine Tiefe von 1 mm bis 3 mm aufweist.

17. Abdeckelement (80) für ein Installationsgerät für Sammelschienen, das mindestens ein Verriegelungselement (10) nach einem der vorhergehenden Ansprüche umfasst das relativ zu dem Abdeckelement (80) in einer Längsrichtung (x-Richtung) zwischen verschiedenen Befestigungspositionen bewegbar ist.

18. Abdeckelement nach Anspruch 17, **dadurch gekennzeichnet, daß** das Verriegelungselement (10) in einer Aufnahme (100) für das Verriegelungselement (10) in einer Seitenwand des Abdeckelements (80) vorgesehen ist.

19. Abdeckelement nach Anspruch 17 oder 18, **dadurch gekennzeichnet, daß** es einen Führungsbolzen (110) umfaßt, der in eine längliche Ausnehmung (26) eines Verriegelungselements (10) eingreift.

20. Abdeckelement nach einem der Ansprüche 17 bis 19, **dadurch gekennzeichnet, daß** es einen Rastabsatz (222) für ein Rastelement (30) des Vernegelungselements (10) umfaßt.

21. Abdeckelement nach einem der Ansprüche 17 bis 20, **dadurch gekennzeichnet, daß** das Verriegelungselement (10) und das Abdeckelement (80) so ausgebildet sind, daß das Verriegelungselement (10) in einer Richtung quer zu der Längsrichtung (z-Richtung), in der das Verriegelungselement (10) zwischen Befestigungspositionen verschiebbar ist, um einen festgelegten Winkel γ kippbar bzw. verdrehbar ist.

22. Abdeckelement nach Anspruch 21 mit einem Verriegelungselement nach einem der Ansprüche 12 bis 16, wobei der Betrag des Winkels γ im wesentlichen dem Betrag des Winkels α entspricht.

23. Installationsgerät für Sammelschienen mit einem Verriegelungselement nach einem der Ansprüche 1 bis 16 und/oder mit einem Abdeckelement nach einem der Ansprüche 17 bis 22.

## Claims

1. A locking element for fixing an installation device to busbars, which is in the form of a slide so that it can be fixed in or on the installation device such that it is moveable essentially linearly between different fixing positions, wherein the locking element is an integral component, which comprises at least one guide element (20) for guiding the linear movement of the locking element (10) in the installation device, at least one fixing element (40), which is provided with retaining shoulders, **characterized in that** said locking element comprises at least one spring element (60), which can be loaded at least in the direction of the linear movement and is designed such that, when the locking element is inserted correctly, the spring element (60) is prestressed in the guide direction of the linear movement of the locking element in the installation device.

2. The locking element as claimed in claim 1, **characterized in that** the locking element (10) is in the form of a plate.

3. The locking element as claimed in claim 1 or 2, **characterized in that** the thickness of the locking element (10) is less than 3 mm.

4. The locking element as claimed in one of the preceding claims, **characterized in that** the locking element (10) is made from a plastic material.

5. The locking element as claimed in claim 4, **characterized in that** the locking element (10) is an injection-molded element.

6. The locking element as claimed in one of the preceding claims, **characterized in that** the guide element (20) is in the form of a bar.

7. The locking element as claimed in one of the preceding claims, **characterized in that** the at least one spring element (60) has a meandering formation.

8. The locking element as claimed in one of the preceding claims, **characterized in that** the at least one guide element (20) comprises an elongate cutout for the purpose of accommodating a guide bolt (110).

9. The locking element as claimed in one of the preceding claims, **characterized in that** the at least one guide element (20) comprises a groove (28) for the engagement of a tool for the purpose of moving the locking element (10) in a direction (z direction) counter to the spring force of the spring element.

10. The locking element as claimed in one of the preceding claims, **characterized in that** the at least one guide element comprises a latching tongue for the purpose of latching the locking element (10) in the installation device.

11. The locking element as claimed in one of the preceding claims, **characterized in that** the retaining shoulders of the fixing element (40) are in the form of steps.

12. The locking element as claimed in claim 11, **characterized in that** an internal angle α of one step of a retaining shoulder is .smaller than 90° by an angle β.

13. The locking element as claimed in one of the preceding claims, **characterized in that** the spring element (60) can also be loaded in a direction essentially perpendicular (y direction) to the linear movement (x direction) between the different fixing positions.

14. The locking element as claimed in claim 13, **characterized in that** the spring element can be rotated in a direction perpendicular (y direction) to the direction of the linear movement (x direction).

15. The locking element as claimed in claim 13 or 14, **characterized in that** the spring element (60) is provided laterally with a projection (70).

16. The locking element as claimed in claim 15, **characterized in that** the projection (70) is essentially in the form of a knob and has a depth of from 1 mm to 3 mm.

17. A cover element (80) for an installation device for busbars having at least one locking element (10) as claimed in one of the preceding claims, which can be moved between different fixing positions in a longitudinal direction (x direction) in relation to the cover element (80).

18. The cover element as claimed in claim 17, **characterized in that** the locking element (10) is provided in a receptacle (100) for the locking element (10) in a side wall of the cover element (80).

19. The cover element as claimed in claim 17 or 18, **characterized in that** it comprises a guide bolt (110), which engages in an elongate cutout (26) in a locking element (10).

20. The cover element as claimed in one of claims 17 to 19, **characterized in that** it comprises a latching shoulder (222) for a latching element (30) of the locking element (10).

21. The cover element as claimed in one of claims 17 to 20, **characterized in that** the locking element (10) and the cover element (80) are designed such that the locking element (10) can be tilted or rotated through a fixed angle γ in a direction transverse to the longitudinal direction (z direction), in which the locking element (10) can be displaced between fixing positions.

22. The cover element as claimed in claim 21 having the locking element as claimed in one of claims 12 to 16, the magnitude of the angle γ essentially corresponding to the magnitude of the angle α.

23. An installation device for busbars having the locking element as claimed in one of claims 1 to 16 and/or having the cover element as claimed in one of claims 17 to 22.

## Revendications

1. Elément de verrouillage pour fixer un appareil d'installation sur des barres omnibus, réalisé sous la forme de coulisseau, de manière à pouvoir être fixé dans ou sur l'appareil d'installation, avec mobilité, de façon sensiblement linéaire entre différentes positions de fixation, l'élément de verrouillage étant un composant monobloc, le au moins un élément de guidage (20) pour le guidage du déplacement linéaire de l'élément de verrouillage (10) dans l'appareil d'installation comprenant au moins un élément de fixation (40) muni de décrochements de maintien, et **caractérisé en ce que** l'élément de verrouillage comprend au moins un élément élastique (60) susceptible être chargé dans la direction du déplacement linéaire, conçu de manière que l'élément élastique (60) en cas d'utilisation conforme de l'élément de verrouillage soit précontraint dans l'appareil d'installation, dans la direction de guidage du déplacement linéaire de l'élément de verrouillage.

2. Elément de verrouillage selon la revendication 1, **caractérisé en ce que** l'élément de verrouillage (10) est conformé en plaque.

3. Elément de verrouillage selon la revendication 1 ou 2, **caractérisé en ce que** l'épaisseur de l'élément de verrouillage (10) est inférieure à 3 mm.

4. Elément de verrouillage selon l'une des revendications précédentes, **caractérisé en ce que** l'élément de verrouillage (10) est formé d'un matériau synthétique.

5. Elément de verrouillage selon la revendication 4, **caractérisé en ce que** l'élément de verrouillage (10) est un élément moulé par injection.

6. Elément de verrouillage selon l'une des revendications précédentes, **caractérisé en ce que** l'élément de guidage (20) est conformé en poutre.

7. Elément de verrouillage selon l'une des revendications précédentes, **caractérisé en ce que** le au moins un élément élastique (60) est conformé en méandres.

8. Elément de verrouillage selon l'une des revendications précédentes, **caractérisé en ce que** le au moins un élément de guidage (20) comprend un évidement allongé, pour recevoir un boulon de guidage (110).

9. Elément de verrouillage selon l'une des revendications précédentes, **caractérisé en ce que** le au moins un élément de guidage (20) comprend une rainure (28), pour la mise en prise d'un outil pour le déplacement de l'élément de verrouillage (10), dans un sens (sens z) allant à l'encontre de la force élastique de l'élément élastique.

10. Elément de verrouillage selon l'une des revendications précédentes, **caractérisé en ce que** le au moins un élément de guidage comprend une languette d'encliquetage pour encliqueter l'élément de verrouillage (10) dans l'appareil d'installation.

11. Elément de verrouillage selon l'une des revendications précédentes, **caractérisé en ce que** les décrochements de maintien de l'élément de fixation (40) sont conformés en gradin.

12. Elément de verrouillage selon la revendication 11, **caractérisé en ce qu'**un angle intérieur α d'un gradin d'un décrochement de maintien est inférieur, de la valeur d'un angle β, à 90°.

13. Elément de verrouillage selon l'une des revendications précédentes, **caractérisé en ce que** l'élément élastique (60) est susceptible être chargé également dans une direction sensiblement perpendiculaire (direction y) au déplacement linéaire (direction x), entre les différentes positions de fixation.

14. Elément de verrouillage selon la revendication 13, **caractérisé en ce que** l'élément élastique est susceptible être tourné en une direction perpendiculaire (direction y) par rapport à la direction du déplacement linéaire (direction x).

15. Elément de verrouillage selon la revendication 13 ou 14, **caractérisé en ce que** l'élément élastique (60) est muni latéralement d'une saillie (70).

16. Elément de verrouillage selon la revendication 15, **caractérisé en ce que** la saillie (70) est conformée sensiblement en bouton et présente une profondeur de 1 mm à 3 mm.

17. Elément de recouvrement (80) pour un appareil d'installation pour des barres omnibus, comprenant au moins un élément de verrouillage (10) selon l'une des revendications précédentes, qui est déplaçable par rapport à l'élément de recouvrement (80), en une direction longitudinale (direction x), entre différentes positions de fixation.

18. Elément de recouvrement selon la revendication 17, **caractérisé en ce que** l'élément de verrouillage (10) est prévu dans un logement (100) pour l'élément de verrouillage (10), dans une paroi latérale de l'élément de recouvrement (80).

19. Elément de recouvrement selon la revendication 17 ou 18, **caractérisé en ce qu'**il comprend un boulon de guidage (110), s'engageant dans un évidement (26) allongé d'un élément de verrouillage (10).

20. Elément de recouvrement selon l'une des revendications 17 à 19, **caractérisé en ce qu'**il comprend un décrochement d'encliquetage (222), pour un élément d'encliquetage (30) de l'élément de verrouillage (10).

21. Elément de recouvrement selon l'une des revendications 17 à 20, **caractérisé en ce que** l'élément de verrouillage (10) et l'élément de recouvrement (80) sont conformés de manière que l'élément de verrouillage (10) soit susceptible être basculé ou tourné dans une direction transversale par rapport à la direction longitudinale (direction z), dans laquelle l'élément de verrouillage (10) est susceptible être déplacé entre des positions de fixation, le mouvement de basculement de rotation étant d'un angle γ fixé.

22. Elément de recouvrement selon la revendication 21, comprenant l'élément de verrouillage selon l'une des revendications 12 à 16, la valeur de l'angle γ correspondant sensiblement à la valeur de l'angle α.

23. Appareil d'installation pour des barres omnibus avec un élément de verrouillage selon l'une des revendications 1 à 16 et/ou avec un élément de recouvrement selon l'une des revendications 17 à 22.
